# EUROPÄISCHE PATENTANMELDUNG

(11) **EP 4 280 322 A2**
(43) Veröffentlichungstag der Anmeldung: **22.11.2023**
(21) Anmeldenummer: 23173229.8
(22) Anmeldetag: 12.05.2023
(51) Int. Cl.: H01M 8/04119, H01M 8/04225, H01M 8/04223, H01M 8/04302, H01M 8/0438, H01M 8/04746

(54) **VERFAHREN ZUM BETREIBEN EINER BRENNSTOFFZELLENVORRICHTUNG**

(30) Priorität: 20.05.2022 DE 102022205066
(71) Anmelder: thyssenkrupp Marine Systems GmbH, 24143 Kiel (DE); thyssenkrupp AG, 45143 Essen (DE)
(72) Erfinder: Pommer, Hans, 24360 Barkelsby (DE)
(74) Vertreter: thyssenkrupp Intellectual Property GmbH

(57) **Zusammenfassung**

Die vorliegende Erfindung betrifft ein Verfahren zum Anfahren einer Brennstoffzelle bei gleichzeitiger Entfernung von Wasserrückständen aus der Brennstoffzelle.

## Beschreibung

Die Erfindung betrifft ein Verfahren zum Anfahren einer Brennstoffzelle bei gleichzeitiger Entfernung von Wasserrückständen aus der Brennstoffzelle.

Brennstoffzellen setzen an einer Membran Wasserstoff und Sauerstoff um, sodass beispielsweise bei einer Polymerelektrolytmembran (PEM) Brennstoffzelle (BZ) Wasser auf der Kathodenseite (Sauerstoffseite) entsteht. Prinzipiell wird dieses Wasser im laufenden Betrieb ausgetragen, insbesondere bei einer Kreislaufbrennstoffzelle. Es kann jedoch, insbesondere auch zwischen dem Abschalten und dem Wiederanfahren dazu kommen, dass es zu Wasseransammlungen kommt. Diese werden speziell bei etwas hydrophileren Elektroden im laufenden Betrieb schlechter ausgetragen. Diese Wasservolumina führen aber zu einer Reduzierung der nutzbaren Membranfläche, weshalb diese vermieden werden sollten.

Auf der anderen Seite ist eine konstante Befeuchtung der Membran üblicherweise notwendig, um den Protonentransport zu gewährleisten und beispielsweise eine Riss- oder Lochbildung zu vermeiden. Eine vollständige Austrocknung einer Brennstoffzelle ist daher üblicherweise zu vermeiden.

Aus dem Stand der Technik ist bekannt, eine Brennstoffzelle vor dem erneuten Anfahren zu evakuieren, um so Gase zu entfernen und die Befüllung mit den Eduktgasen zu erleichtern. Auf diese Weise kann auf ein Spülen verzichtet werden, was insbesondere in einer Umgebung, in der die Gase nur begrenzt an die Umgebung abgegeben werden können, zum Beispiel in einem Unterseeboot, unnötige Emissionen, insbesondere von Wasserstoff vermeidet.

Aus der JP 3 455 725 B2 ist ein Verfahren zur Konditionierung einer Brennstoffzelle unter Frostbedingungen bekannt.

Ist eine Brennstoffzelle ausgeschaltet, so wird diese zumeist feucht gelagert, um ein Austrocknen der Membran zu verhindern. Ein Austrocknen führt leicht zu einer Defektbildung, beispielsweise einem Riss, sodass Anodenseite und Kathodenseite in direkten Kontakt kommen, was durch die direkte und unkontrollierte Reaktion der Gase zu einer starken Wärmeentwicklung und damit meist zu einer massiven Vergrößerung des Defekts führt. Eine Brennstoffzelle mit einem Defekt in der Membran wird unverzüglich abgeschaltet. Da aber somit durch die Lagerung die Bildung von flüssigem Wasser in der Brennstoffzelle wenigstens begünstigt ist, besteht das Problem, dass durch das Flüssigkeitsvolumen das für die Gase zur Verfügung stehende Volumen reduziert wird und somit auch die erzeugbare elektrische Leistung.

Aufgabe der Erfindung ist es, ein Verfahren bereitzustellen, mit dem ein Überschuss an Wasser nach der Lagerung im ausgeschalteten Zustand entfernt werden kann, ohne die Gefahr der Austrocknung der Membran zu erzeugen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren zum Anfahren einer Brennstoffzellenvorrichtung aus dem ausgeschalteten Zustand weist die folgenden Schritte auf:
a) Bereitstellen der ausgeschalteten Brennstoffzellenvorrichtung,
b) Evakuieren der Brennstoffzellenvorrichtung bis zum Dampfdruck des Wassers in der Brennstoffzellenvorrichtung,
c) Halten des Drucks auf dem Dampfdruck des Wassers in der Brennstoffzellenvorrichtung für eine vorgegebene Zeit t₁,
d) Beenden des Evakuierens und Zuführen der Eduktgase zur Brennstoffzellenvorrichtung,
e) Betreiben der Brennstoffzellenvorrichtung zur Energieerzeugung.

Ausgeschaltete Brennstoffzellenvorrichtung bedeutet im Sinne der Erfindung jede Brennstoffzelle, welche nicht zur aktiven Stromerzeugung genutzt wird und funktionsfähig an der Vorrichtung angeschlossen ist. Das kann von einem Standby-Betrieb bis zur ersten Verwendung nach dem Zusammenbau der Brennstoffzelle alles umfassen. Der ausgeschaltete Zustand unterscheidet sich vom Betrieb dadurch, dass im Betrieb durch die ablaufende Reaktion ständig Wasser erzeugt und auch ausgetragen wird. Im laufenden Betrieb ist somit ein Gleichgewicht aus Befeuchtung der Membran und Vermeidung des Flutens der Brennstoffzelle sichergestellt. Dieses ist im ausgeschalteten Zustand nicht der Fall, weshalb zur Vermeidung einer Beschädigung der Membran üblicherweise die Kondensation von Wasser in Kauf genommen wird. Die Menge an flüssigem Wasser einer ausgeschalteten Brennstoffzelle ist somit üblicherweise nicht bekannt.

Während es bekannt ist, die Schritte a), d) und e) zur Entfernung von Restgasen und daher dem Vermeiden eines Spülens durchzuführen, wird der Schritt c) üblicherweise vermieden, um ein Austrocknungen und damit eine Beschädigung der Membran zu vermeiden.

Weiter ist auch die Vorgabe einer Zeit wichtig. Theoretisch könnte man den Schritt c) durchführen, bis ein weiterer Druckabfall anzeigt, dass das Wasser verdampft ist. Erst dann ist ein Evakuieren unter den Dampfdruck möglich. Dann aber ist die Membran bereits zu trocken und müsste vor dem Betrieb erneut befeuchtet werden. Daher kann eine aktive Regelung der Feuchtigkeit nicht erfolgen, sondern es muss eine Zeit vorgegeben werden, damit die Membran selber nicht zu trocken wird.

Eine Brennstoffzellenvorrichtung weist üblicherweise mehr als nur eine Brennstoffzelle auf. Meistens ist eine Mehrzahl an Brennstoffzellen zu einem sogenannten Stack zusammengefasst. Diese werden zumeist jeweils in einem Modul verbaut. Zum einen ist dadurch der Austausch von Stacks, insbesondere nach einem Defekt, erleichtert. Zum anderen können daher verschieden leistungsstarke Brennstoffzellenvorrichtungen leicht über die Anzahl der Module skaliert werden. Bei einem Defekt lässt sich dann jeweils das Modul mit einem defekten Stack gegen ein neues Modul austauschen. Daher wird die Erfindung vorzugsweise für jedes einzelne Modul (beziehungsweise somit jeder Stack oder auch eine funktionelle Einheit von mehreren Module beziehungswiese Stacks) durchgeführt, selbst wenn die Brennstoffzellenvorrichtung selber eine Mehrzahl an solchen Modulen mit Stacks beziehungsweise mehrere funktionelle Einheiten aufweist.

In einer weiteren Ausführungsform der Erfindung wird der Dampfdruck des Wassers in der Brennstoffzellenvorrichtung aus der Dampfdruckkurve des Wassers mittels einer

Temperaturmessung an oder in der Brennstoffzellenvorrichtung ermittelt. Dadurch ist eine einfache Anpassung an die Umgebungstemperatur möglich.

In einer weiteren alternativen Ausführungsform der Erfindung wird der Dampfdruck des Wassers in der Brennstoffzellenvorrichtung aus dem Druckverlauf beim Evakuieren dadurch ermittelt, dass der Druck bei konstantem Evakuieren sich erniedrigt, wobei sich der Druckabfall zuerst verlangsamt und dann einen konstanten Druck erreicht. Der konstante Druck wird dadurch erreicht, dass der Dampfdruck über einer flüssigen Phase konstant ist, solange die flüssige Phase vorhanden ist. Erst wenn die flüssige Phase vollständig verdampft ist, kann der Druck weiter fallen. Hierdurch kann auf weitere Messungen verzichten werden und die Regelung direkt über den Druck selber erfolgen.

In einer weiteren alternativen Ausführungsform der Erfindung wurde die Brennstoffzellenvorrichtung vor Schritt b) feucht gelagert. Die Brennstoffzelle befand sich also in einer feuchten Lagerung im ausgeschalteten Zustand.

In einem weiteren Aspekt betrifft die Erfindung ein Verfahren zum Ermitteln der Zeit t₁ zum Evakuieren einer Brennstoffzellenvorrichtung nach dem vorgenannten erfindungsgemäßen Verfahren. Das Verfahren weist die folgenden Schritte auf:
I) Vorgeben eines Zeitintervalls t_{min,n}=t_{min,1} und Vorgeben eines Rundenzählers n = 1, wobei n die n-te Runde bezeichnet, n-1 die der n-ten Runde vorhergehende Runde bezeichnet und n+1 die der n-ten Runde nachfolgende Runde bezeichnet,
II) Evakuieren der Brennstoffzellenvorrichtung bis zum Dampfdruck des Wassers in der Brennstoffzellenvorrichtung,
III) Halten des Drucks auf dem Dampfdruck des Wassers in der Brennstoffzellenvorrichtung für eine vorgegebene Zeit tₘᵢₙ,ₙ
IV) Beenden des Evakuierens und Zuführen der Eduktgase zur Brennstoffzellenvorrichtung,
V) Betreiben der Brennstoffzellenvorrichtung zur Energieerzeugung,
VI) Ermitteln der elektrischen Leistung der Brennstoffzellenvorrichtung,
VII) Vergleichen der in Schritt VI) ermittelten elektrischen Leistung der Brennstoffzellenvorrichtung mit dem Sollwert,
VIII) Bei Unterschreiten des Sollwertes um mehr als einen vorgegebenen Toleranzwert, Abschalten der Brennstoffzellenvorrichtung, Erhöhen des Rundenzählers n um 1, Vorgeben eines für den nächsten Durchlauf zu verwendenden Zeitintervalls t_{min,n} und Wiederholung der Schritte II) bis VIII),
IX) Ermitteln und Vorgeben des Wertes t₁ aus den in Schritt III) verbrachten Zeiten.

n ist eine natürliche Zahl. In der ersten Runde / dem ersten Durchlauf ist n = 1, in der zweiten Runde / dem zweiten Durchlauf ist n = 2, in der dritten Runde / dem dritten Durchlauf ist n = 3 und so weiter. Beim letzten Durchlauf (vor dem Abbruch der Wiederholung in Schritt VIII) erreicht n den höchsten Wert n(max).

t_{min,1} ist somit eine einmal vorgegebene Konstante, beispielsweise 1 min, während t_{min,n} auch zwischen zwei Durchläufen verändert werden kann. Das Zeitintervall t_{min,n} das für den Folgedurchgang ermittelt und vorgegeben wird, ist abhängig von den Randbedingungen der Brennstoffzellenanordnung.

Als Sollwert ist der Wert anzusehen, auf den die Brennstoffzellenvorrichtung ausgelegt ist oder gegebenenfalls nach Gebrauch der zeitlich veränderliche Maximalwert. Der Sollwert entspricht somit dem Wert, bei welchem die Brennstoffzellenvorrichtung 100 % ihrer Solleistung erbringt. Alternativ kann der Sollwert auch relativ bestimmt werden, wenn beispielsweise ein Stack gleichartiger Brennstoffzellenelemente verwendet wird. Anstelle auf einen nominellen Sollwert abzuziehen, können die Brennstoffzellenelemente untereinander als Referenz verwendet werden. In diesem Fall wird das Brennstoffzellenelement mit der höchsten Leistung als Sollwert verwendet.

Als Toleranzwert in Schritt VIII) kann beispielsweise ein Wert von 95 % vorgegeben werden. Die restlichen 5 % decken dann zum Beispiel Messgenauigkeit, Exemplarschwankung und Fertigungsschwankung (Abweichung von Erwartungswert) ab.

Wird beispielsweise t_{min,1} als 1 min vorgegeben, so wird weiter das Verfahren durchgeführt und nach dem ersten Durchlauf liegt der Wert in Schritt VII) bei 70 % des Sollwertes, so wird gemäß Schritt VIII) die Wiederholung vorgenommen. Wenn man nun annimmt, dass das Betreiben in Schritt V) derart kurz erfolgt, dass sich kein Wasser abscheiden kann, so kann t_{min,n} gleich t_{min,1} gesetzt werden und die weiteren Wiederholungen erfolgen mit den zeitlich identischen Abläufen. In Schritt IX) erfolgt dann eine Addition der Zeiten. Wäre dann beispielsweise nach 5 Durchläufen der Wert in Schritt VII) zwischen 95 und 100 % des Sollwertes, so würde hier beendet und in Schritt IX) der Wert von t₁ auf den Wert von 5 min gesetzt. Im Folgenden würde die Brennstoffzellenvorrichtung dann bei jedem erneuten Anfahren für 5 min evakuiert.

In Schritt I) wird ein Zeitintervalls t_{min,1} vorgegeben, bei dem keine zu starke Entfeuchtung der Membran zu erwarten ist. Ein zu kurzes Zeitintervall führt schnell zu einer Anpassung durch die weiteren Prozessschritte. Ein zu lang gewähltes Zeitintervall t_{min,1} kann jedoch bereits beim ersten Durchlauf zu einer Beschädigung führen.

Wird das Betreiben in Schritt V) jedoch so durchgeführt, dass ein erneutes Abscheiden von Wasser erfolgt, so ist es zielführend bei jedem Durchlauf die Zeit von t_{min,n} nach jedem Durchlauf anzuheben. In diesem Fall wird bevorzugt in Schritt IX) die im letzten Durchlauf verwendete Zeit t_{min,n(max)} (und damit die längste verwendete Zeit t_{min,n(max)}) als t₁ vorgegeben.

In einer weiteren Ausführungsform der Erfindung wird der Wert t_{min,1} zwischen 30 s und 240 s, bevorzugt von 60 s bis 180 s, vorgegeben.

In einer weiteren Ausführungsform der Erfindung wird in Schritt VIII) das Zeitintervalls t_{min,n-1} der vorhergehenden n-1-ten Runde zu t_{min,n} in der n-ten Runde modifiziert. Hierbei kann die Modifikation, wie im Folgenden ausgeführt, unterschiedlich ausfallen.

In einer weiteren Ausführungsform der Erfindung wird in Schritt VIII) das Zeitintervalls t_{min,n} gegenüber t_{min,n-1} inkrementell erhöht. Dieses erfolgt bei jedem Durchlauf, das Zeitintervall wird um den Wert t_{min,1} erhöht, t_{min,n} ist somit t_{min,n-1} + t_{min,1}. t_{min,n} wird somit für den nächsten Durchlauf vorgegeben. Ist t_{min,1} zum Beispiel 1 min, so sind die weiteren Durchläufe dann bei für n = 2 t_{min,2 =} 2 min, n = 3 t_{min,3 =} 3 min, n = 4 t_{min,4 =} 4 min und so weiter. Dieses ist besonders bevorzugt, wenn in Schritt V) das Betreiben derart erfolgt, dass sich bei jedem Betreiben erneut Wasser abscheiden kann, also bei jedem Start des Durchlaufs in Schritt II) in erster Näherung jeweils gleich viel Wasser im Brennstoffzellensystem ist.

In einer weiteren Ausführungsform der Erfindung erfolgt in Schritt IX) das Vorgeben des Wertes t₁ durch den im letzten Durchlauf mit n(max) verwendeten Wert von t_{min,n(max)}. Dieses ist besonders bevorzugt, wenn in Schritt V) das Betreiben derart erfolgt, dass sich bei jedem Betreiben erneut Wasser abscheiden kann, also bei jedem Start des Durchlaufs in Schritt II) in erster Näherung jeweils gleich viel Wasser ist.

In einer weiteren Ausführungsform ist vorgesehen, dass man in Schritt VIII) die Schritte II) bis VIII) in einer ersten Wiederholung ( n = 2) mit einer unveränderten t_{min,2} = t_{min,1} durchführt und beim zweiten Durchlaufen (n = 2) des Schritts VII) feststellt, dass beim Ermitteln und Vergleichen der elektrischen Leistung der Brennstoffzellenvorrichtung mit dem Sollwert die Werte aus dem ersten Durchlauf (n = 1) und dem zweiten Durchlauf (n = 2) ähnlich oder identisch sind und für die weiteren Wiederholungen der Schritte II)bis VIII) die Länge des Zeitintervalls t_{min,n} ändert. Vorteil dieses Vorgehens ist, dass man im ersten Schritt durch die Veränderung des Sollwerts in Schritt VII) feststellen kann, ob sich erneut Wasser an der Membran abgeschieden hat oder nicht und welches weitere Vorgehen für die weiteren Wiederholungen am sinnvollsten ist. Scheidet sich kein weiteres Wasser ab, so ist die in Schritt VI) ermittelte elektrische Leistung beim zweiten Durchlauf (n = 2) größer als im ersten Durchlauf (n= 1). Scheidet sich weiteres Wasser ab, so ist die in Schritt VI) ermittelte elektrische Leistung beim zweiten Durchlauf (n = 2) gleich der im ersten Durchlauf (n= 1).

In einer weiteren Ausführungsform der Erfindung wird das Verfahren nach einem zweimaligen Durchfahren der Schritte II) bis VII) mit unterschiedlichen Zeitenintervallen durchgeführt. Dabei kann aus der Veränderung des Sollwerts ein Zeitintervall abgeschätzt werden bei dem der Sollwert erreicht ist. Das Zeitintervall kann beispielsweise linear extrapoliert werden oder auch in jedem Durchgang durch die gleiche Zeitdauer verlängert werden oder anhand einer Vergleichskurve bestimmt werden.

In einer weiteren Ausführungsform der Erfindung wird in Schritt VIII) das Zeitintervalls t_{min,n-1} der vorhergehenden n-1-ten Runde zu t_{min,n} in der n-ten Runde modifiziert. Diese Modifikation erfolgt in Abhängigkeit von der Höhe der Differenz zwischen der elektrischen Leistung der Brennstoffzellenvorrichtung und dem Sollwert. Ist die Differenz hoch, so wird t_{min,n} stärkerer gegenüber t_{min,n-1} erhöht, ist die Differenz klein, wird t_{min,n} weniger stark gegenüber t_{min,n-1} erhöht. Hierdurch ist ein auf der einen Seite schnelles, auf der anderen Seite aber auch vorsichtiges Herantasten an den zu erzielenden Wert t₁ möglich. Dieses kann entweder absolut anhand der Abweichung zwischen der in Schritt VI) ermittelten Leistung der Brennstoffzellenvorrichtung und dem Sollwert erfolgen. Beispielsweise kann bei einer erreichten Leistung von 90 bis 95 % des Sollwertes das Zeitintervall um t_{min,1} erhöht werden, bei einer erreichten Leistung von 80 bis 90 % des Sollwertes das Zeitintervall um 2 t_{min,1} erhöht werden, bei einer erreichten Leistung von 70 bis 80 % des Sollwertes das Zeitintervall um 3 t_{min,1} erhöht werden und so weiter. Somit wird das Zeitintervall t_{min,n} gegenüber t_{min,n-1} um so stärker erhöht, je weiter die Leistung vom Sollwert entfernt ist. Um so geringer ist auch das Risiko der Austrocknung der Membran. Alternativ kann die Anpassung aber auch aus der Veränderung der Leistung zwischen zwei Durchläufen angepasst werden. Wird beispielsweise beim ersten Durchlauf n = 1 mit t_{min,1} 70 % des Sollwertes erreicht und beim zweiten Durchlauf n = 2 mit t_{min,2} = t_{min,1} + t_{min,1} = 2 t_{min,1} 75 % des Sollwertes erreicht, so kann beispielsweise abgeschätzt werden, dass für den dritten Durchlauf n = 3 ein Zeitintervall von t_{min,3} = 6 t_{min,1} einen Wert von etwa 95 % des Sollwertes erreichen könnte, sicher unterhalb einer Austrocknung, aber nahe an der Zielzeit, sodass unnötige Schritte vermieden werden können.

Um das Verfahren zum Anfahren einer Brennstoffzellenvorrichtung durchzuführen weist die Brennstoffzellenvorrichtung bevorzugt eine Steuerungsvorrichtung auf, welche das Verfahren zum Anfahren einer Brennstoffzellenvorrichtung ausführt. Hierzu weist die Steuerungsvorrichtung bevorzugt eine Eingabemöglichkeit zur Eingabe der Zeit t₁ auf. Des Weiteren ist die Steuerungsvorrichtung zur Ansteuerung einer Pumpe sowie zur Ansteuerung von Ventilen ausgebildet. Weiter weist die Steuervorrichtung eine Verbindung zu einem Drucksensor auf. Ein erstes Ventil ist hierbei zwischen der Pumpe und der Brennstoffzellenelement angeordnet. Wenigstens ein zweites Ventil ist zwischen der Gasquelle und dem Brennstoffzellenelement angeordnet. So kann die Steuerungsvorrichtung beispielsweise die Pumpe anschalten, das zweite Ventil schließen, das erste Ventil öffnen, die Zeit t₁ abwarten, das erste Ventil schließen und das zweite Ventil öffnen sowie die Pumpe wieder abschalten. Natürlich kann auch das zweite Ventil geöffnet werden, bevor das erste Ventil geschlossen wird. Hierdurch wird ein verstärkter Gas-Spül-Effekt erzielt.

Zusätzlich kann die Steuerungsvorrichtung auch ausgebildet sein, um das Verfahren zum Ermitteln der Zeit t₁ zum Evakuieren einer Brennstoffzellenvorrichtung auszuführen. Hierzu weist die Steuerverbindung zusätzliche Verbindungen zu Spannungsmesser und Strommesser auf, um die von der Brennstoffzellenvorrichtung abgegebene Leistung zu ermitteln. Weiter weist die Steuervorrichtung eine Eingabemöglichkeit zur Vorgabe des Sollwertes auf.

Nachfolgend ist das erfindungsgemäße Verfahren anhand eines in den Zeichnungen dargestellten Ausführungsbeispiels näher erläutert.
- Fig. 1: Verfahren zum Ermitteln der Zeit t₁
- Fig. 2: Verfahren zum Anfahren einer Brennstoffzellenvorrichtung

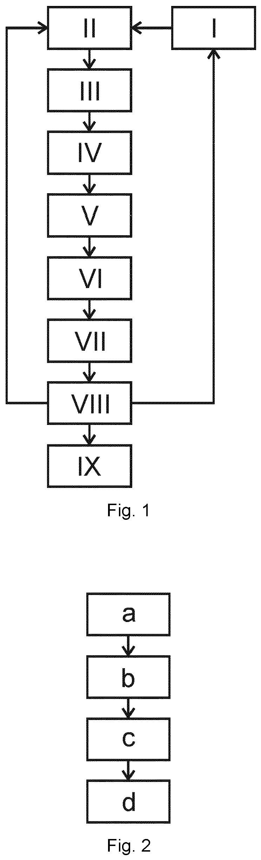

In Fig. 1 ist das erfindungsgemäße Verfahren zum Ermitteln der Zeit t₁ zum Evakuieren einer Brennstoffzellenvorrichtung gezeigt.

In Schritt I) wird ein Zeitintervalls t_{min,1} vorgegeben, beispielsweise 2 min. Der Rundenzähler n wird auf n = 1 gesetzt. Anschließend wird in Schritt II) die Brennstoffzellenvorrichtung bis zum Erreichen des Dampfdrucks des Wassers in der Brennstoffzellenvorrichtung evakuiert. Anschließend wird in Schritt III) der Druck auf dem Dampfdruck des Wassers in der Brennstoffzellenvorrichtung für die vorgegebene Zeit t_{min,n} gehalten, in diesem Beispiel beim ersten Durchlauf mit n = 1 für t_{min,1} = 2 min. Anschließend wird in Schritt IV) das Evakuieren beendet und Eduktgase werden der Brennstoffzellenvorrichtung zugeführt. Anschließend wird in Schritt V) die Brennstoffzellenvorrichtung zur Energieerzeugung betrieben und in Schritt VI) die elektrische Leistung der Brennstoffzellenvorrichtung ermittelt beziehungsweise die einzelnen Zellspannungen verglichen. In Schritt VII) erfolgt dann ein Vergleich der ermittelten elektrischen Leistung der Brennstoffzellenvorrichtung mit dem Sollwert. Bei Unterschreiten des Sollwertes um mehr als einen vorgegebenen Toleranzwert, beispielsweise 5 %, erfolgt in Schritt VIII) ein Abschalten der Brennstoffzellenvorrichtung und die Wiederholung der Schritte II) bis VIII). Weiter erfolgt ein Erhöhen des Rundenzählers n um 1. Ebenso erfolgt ein Vorgeben eines Zeitintervalls t_{min,n} für den nächsten Durchlauf n. Ist am Ende der Sollwert um weniger als den Toleranzwert unterschritten so wird in Schritt IX) als Wert t₁ aus den in Schritt III) verbrachten Zeiten ermittelt und vorgegeben.

Fig. 2 zeigt das erfindungsgemäße Verfahren zum Anfahren einer Brennstoffzellenvorrichtung.

Zunächst erfolgt in Schritt a) das Evakuieren der Brennstoffzellenvorrichtung bis zum Dampfdruck des Wassers in der Brennstoffzellenvorrichtung. In Schritt c) wird der Druck auf dem Dampfdruck des Wassers in der Brennstoffzellenvorrichtung für eine vorgegebene Zeit t₁ gehalten. Hierdurch wird Wasser entfernt, aber eben nicht zu viel, sodass ein Membranschaden vermieden wird. In Schritt d) wird dann das Evakuieren beendet und Eduktgase werden der Brennstoffzellenvorrichtung zugeführt, sodass in Schritt e) ein Betreiben der Brennstoffzellenvorrichtung zur Energieerzeugung erfolgen kann.

## Patentansprüche

1. Verfahren zum Anfahren einer Brennstoffzellenvorrichtung aus dem ausgeschalteten Zustand, wobei das Verfahren die folgenden Schritte aufweist:
a) Bereitstellen der ausgeschalteten Brennstoffzellenvorrichtung,
b) Evakuieren der Brennstoffzellenvorrichtung bis zum Dampfdruck des Wassers in der Brennstoffzellenvorrichtung,
c) Halten des Drucks auf dem Dampfdruck des Wassers in der Brennstoffzellenvorrichtung für eine vorgegebene Zeit t₁,
d) Beenden des Evakuierens und Zuführen der Eduktgase zur Brennstoffzellenvorrichtung,
e) Betreiben der Brennstoffzellenvorrichtung zur Energieerzeugung.

2. Verfahren nach Anspruch 1, **dadurch gekennzeichnet, dass** der Dampfdruck des Wassers in der Brennstoffzellenvorrichtung über eine Temperaturmessung der Brennstoffzellenvorrichtung aus der Dampfdruckkurve des Wassers ermittelt wird.

3. Verfahren nach Anspruch 1, **dadurch gekennzeichnet, dass** der Dampfdruck des Wassers in der Brennstoffzellenvorrichtung aus dem Druckverlauf beim Evakuieren dadurch ermittelt wird, dass der Druck bei konstantem Evakuieren sich zuerst verlangsamt und dann einen konstanten Druck erreicht.

4. Verfahren nach einem der vorstehenden Ansprüche, **dadurch gekennzeichnet, dass** die Brennstoffzellenvorrichtung vor Schritt b) feucht gelagert wurde.

5. Verfahren zum Ermitteln der Zeit t₁ zum Evakuieren einer Brennstoffzellenvorrichtung während des Verfahrens zum Anfahren nach einem der vorstehenden Ansprüche, **dadurch gekennzeichnet, dass** das Verfahren die folgenden Schritte aufweist:
I) Vorgeben eines Zeitintervalls t_{min,1} und Vorgeben eines Rundenzählers n = 1, wobei n die n-te Runde bezeichnet, n-1 die der n-ten Runde vorhergehende Runde bezeichnet und n+1 die der n-ten Runde nachfolgende Runde bezeichnet,
II) Evakuieren der Brennstoffzellenvorrichtung bis zum Dampfdruck des Wassers in der Brennstoffzellenvorrichtung,
III) Halten des Drucks auf dem Dampfdruck des Wassers in der Brennstoffzellenvorrichtung für eine vorgegebene Zeit t_{min,n},
IV) Beenden des Evakuierens und Zuführen der Eduktgase zur Brennstoffzellenvorrichtung,
V) Betreiben der Brennstoffzellenvorrichtung zur Energieerzeugung,
VI) Ermitteln der elektrischen Leistung der Brennstoffzellenvorrichtung,
VII) Vergleichen der in Schritt VI) ermittelten elektrischen Leistung der Brennstoffzellenvorrichtung mit dem Sollwert,
VIII) Bei Unterschreiten des Sollwertes um mehr als einen vorgegebenen Toleranzwert, Abschalten der Brennstoffzellenvorrichtung, Erhöhen des Rundenzählers n um 1, Vorgeben eines für den nächsten Durchlauf zu verwendenden Zeitintervalls t_{min,n} und Wiederholung der Schritte II) bis VIII),
IX) Ermitteln und Vorgeben des Wertes t₁ aus den in Schritt III) verbrachten Zeiten.

6. Verfahren nach Anspruch 5, **dadurch gekennzeichnet, dass** der Wert t_{min,1} zwischen 30 s und 240 s, bevorzugt von 60 s bis 180 s, vorgegeben wird.

7. Verfahren nach einem der Ansprüche 5 bis 6, **dadurch gekennzeichnet, dass** in Schritt VIII) das Zeitintervall t_{min,n-1} der vorhergehenden n-1-ten Runde zu t_{min,n} in der n-ten Runde modifiziert wird.

8. Verfahren nach Anspruch 7, **dadurch gekennzeichnet, dass** in Schritt VIII) die Vorgabe des Zeitintervalls t_{min,n}, wobei t_{min,n} = t_{min,n-1} + t_{min,1} ist.

9. Verfahren nach Anspruch 8, **dadurch gekennzeichnet, dass** in Schritt IX) das Vorgeben des Wertes t₁ durch den im letzten Durchlauf n(max) verwendeten Wert von t_{min,n(max)} erfolgt.

10. Verfahren nach Anspruch 6, **dadurch gekennzeichnet, dass** in Schritt VIII) das Zeitintervall t_{min,n-1 1} der vorhergehenden n-1-ten Runde zu t_{min,n} in der n-ten Runde modifiziert wird in Abhängigkeit von der Höhe der Differenz zwischen der elektrischen Leistung der Brennstoffzellenvorrichtung und dem Sollwert.
